# EUROPEAN PATENT APPLICATION

(11) **EP 1 736 987 A1**
(43) Date of publication of application: **27.12.2006**
(21) Application number: 05730424.8
(22) Date of filing: 13.04.2005
(51) Int. Cl.: G11B 23/20, G11B 5/627

(54) **LEADER TAPE AND MAGNETIC TAPE CARTRIDGE EMPLOYING IT**

(30) Priority: 13.04.2004 JP 2004117823
(71) Applicant: FUJI PHOTO FILM CO., LTD., Minami-Ashigara-shi, Kanagawa-ken 250-0123 (JP)
(72) Inventor: ICHIKAWA, Tomohiro, c/o FUJIFILM Corporation, Odawara-shi, Kanagawa (JP); EJIRI, Kiyomi, c/o FUJIFILM Corporation, Odawara-shi, Kanagawa (JP)
(74) Representative: HOFFMANN EITLE
(86) International application number: PCT/JP2005/007139
(87) International publication number: WO 2005/101406

(57) **Abstract**

An object is to provide a leader tape which suppresses the increase of dropout resulting from imprinting of the drive reel or leader block part due to storage for a long time or running at a high temperature and hardly causes the edge damage of a magnetic tape, and also provide a magnetic tape cartridge using the leader tape.
1) A leader tape comprising a support having provided on at least one surface thereof a coating layer comprising a powder material and a binder, wherein the center line average roughness (Ra) on at least one surface of the leader tape is from 10 to 60 nm and the friction coefficient against an Al₂O₃/TiC member is from 0.1 to 0.3; and 2) a magnetic tape cartridge including a cartridge case; and a single reel or a plurality of reels, each reel being rotatably housed in the cartridge case and having a magnetic tape wound therearound, in which the magnetic tape has a leader tape of 1), the leader tape being jointed to an leading end of the magnetic tape and drawn out into a magnetic recording and reproducing apparatus while leading the magnetic tape.

## Description

### TECHNICAL FIELD

The present invention relates to a leader tape and a magnetic tape cartridge having a cartridge case a reel, rotatably housed therein, around which a magnetic tape joined with the leader tape is wound.

### BACKGROUND ART

As for the magnetic tape cartridge used heretofore as a recording medium for an external memory unit of a computer or the like, a magnetic tape cartridge of such a type that a magnetic tape is wound around a single reel or a plurality of reels and the reel or reels are rotatably housed in a cartridge case is known. This magnetic tape is used for the data storage of a computer or the like and stores important data and therefore, the magnetic tape cartridge is constructed not to cause a trouble such as tape jamming or not to allow for careless drawing out of the magnetic tape.

In the case of a single reel-type cartridge, the leading end part of the magnetic tape is fixed with a leader member such as leader pin or leader block for drawing out a magnetic tape or joined with a leader tape formed of a relatively hard plastic material and having a catching hole punched at the tape end, and the drive device is constructed to perform loading/unloading (drawing out/winding) of the magnetic tape by holding and drawing out the leader member or leader tape end by means of a holding member on the recording and reproducing apparatus side.

At the time of performing loading/unloading by drawing out the above-described magnetic tape to the magnetic recording and reproducing apparatus side and winding the leading end part around a drive reel in the apparatus, the leading end portion is readily damaged because this portion comes into contact with and is pulled by a tape guide, a magnetic head or the like arranged in the running path while not being correctly positioned. Therefore, reinforcement is preferably applied thereto.

The reinforcement is preferably applied also for preventing the level difference of the leader block generated on a drive reel from being imprinted on a data-recording magnetic tape and thereby increasing dropout, and this is effected by joining a leader tape stronger than the magnetic tape to the leading end of the magnetic tape (see, for example, Patent Document 1).

With the recent progress of a high-capacity magnetic tape cartridge, the recording density is increased and the spacing loss due to imprinting on a data-recording magnetic tape be actualized. Thus, the existing leader tape and data tape are in need of improvement.

The leader block is housed in a recess provided in the core part of a take-up reel and is constructed such that in the housed state, a part of the leader block forms a part of the arc face of the core part.

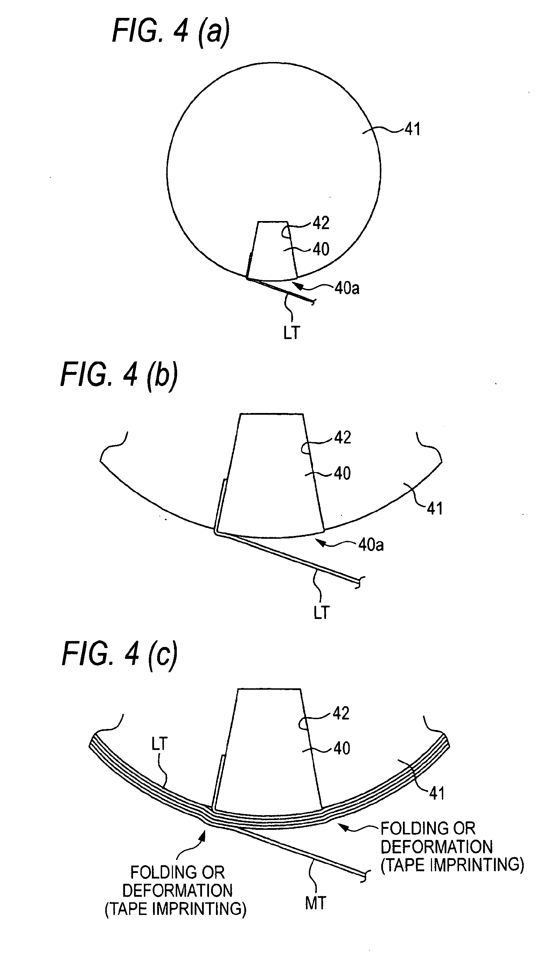

As seen in Fig. 4(a) schematically showing this construction, a leader block 40 is fitted into a recess 42 provided along the diameter direction of the core part 41 and, for example, the end face 40a of the leader block 40 in this state forms a part of the take-up face of the core part 41. As shown in the Figure, the end face 40a of the leader block 40 is curved like an arc in correspondence to the outer peripheral face of the core part 41 so as to enable smooth winding of a magnetic tape MT.

However, in such an existing tape drive, as shown in Fig. 4(b), the end face 40a may protrude from the core part 41 depending on the dimensional accuracy of the leader block 40 constituting a part of the take-up face, and this may bring about an unacceptable level difference on the take-up face of the core part 41.

Such a level difference causes folding or deformation of the leader tape LT and, as shown in Fig. 4(c), the folding or deformation similarly occurs also in the portion of the magnetic tape MT being wound as the next and subsequent layers and working out to a substantial recording region (so-called "tape imprinting" is generated). This tape imprinting readily causes a trouble such as incapability of maintaining an appropriate distance to the recording and reproducing head in the process of recording or reproducing information and gives rise to recording failure or information loss.

In the case where the time for which the tape is being wound around a take-up reel is short, the tape imprinting less causes the above-described issues but, for example, when a magnetic tape MT is used after kept wound around a take-up reel, tape imprinting regularly created at a pitch of nearly the circumference length of the core part 41 is sometimes generated on the surface of the magnetic tape MT.

On the other hand, the recording wavelength at the magnetic recording becomes shorter and shorter and along therewith, the magnetic tape and the leader tape are increasingly demanded not to damage the head. In particular, the leader tape is required not to damage the head on repeating the loading/unloading.

Patent Document 1: JP-A-2001-110164

### DISCLOSURE OF THE INVENTION

### PROBLEMS TO BE SOLVED BY THE INVENTION

An object of the present invention is to provide a leader tape which can suppress the increase of dropout resulting from imprinting of the drive reel or leader block part due to storage for a long time or running at a high temperature and prevent the reduction in the output even when the loading/unloading is repeated, and also provide a magnetic tape cartridge using the leader tape.

### MEANS TO SOLVE THE PROBLEMS

The above-described object of the present invention can be attained by the following means.
1) A leader tape having a center line average roughness Ra of 10 to 60 nm on at least one surface of the leader tape and a friction coefficient of 0.1 to 0.3 against an Al₂O₃/TiC member.
2) The leader tape as described in 1) above, which has a coating layer on at least one surface of the leader tape, the coating layer containing a powder material and a binder.
3) A magnetic tape cartridge comprising: a cartridge case; and a single reel or a plurality of reels, each reel being rotatably housed in the cartridge case and having a magnetic tape wound therearound, wherein the magnetic tape has a leader tape described in 1) or 2) above, the leader tape being jointed to an leading end of the magnetic tape and drawn out into a magnetic recording and reproducing apparatus while leading the magnetic tape.

### EFFECT OF THE INVENTION

In a leader tape of the present invention, a specific surface roughness is provided, so that a proper gap can be formed between a tape and a tape on winding the tape, as a result, the pressure can be relaxed and a leader block or the like can be prevented from being imprinted on a magnetic tape. Furthermore, the friction coefficient is specified, so that the reduction in the output can be prevented without damaging the recording head even when loading/unloading is repeated.

### BRIEF DESCRIPTION OF THE DRAWINGS

Fig. 1 is a block diagram conceptually showing a magnetic recording and reproducing apparatus according to one embodiment of the present invention.
Fig. 2 is an exploded perspective view showing a magnetic tape cartridge used in the same magnetic recording and reproducing apparatus.
Fig. 3(a) is a perspective view showing a drive reel used in the same magnetic recording and reproducing apparatus, and Fig. 3(b) is an enlarged cross-sectional view of the line b-b portion in Fig. 3(a).
Figs. 4(a) to 4(c) each is an explanatory view of the related art.

### DESCRIPTION OF REFERENCE NUMERALS AND SYMBOLS

- 1:: Magnetic recording and reproducing apparatus
- 10:: Magnetic tape cartridge
- 11:: Cartridge reel (delivery reel)
- 20:: Magnetic tape drive
- 21:: Drive reel (take-up reel)
- 21a:: Flange part
- 21b:: Groove part
- 22:: Core part
- 23:: Recess
- 25:: Spindle drive unit
- 26:: Take-up reel drive unit
- 27:: Control unit
- 30:: Leader pin
- 31:: Leader block
- 32:: Drawing-out guide
- H:: Magnetic head
- LT:: Leader tape
- MT:: Magnetic tape

### BEST MODE FOR CARRYING OUT THE INVENTION

The center line average roughness (Ra) on at least one surface of the leader tape of the present invention is from 10 to 60 nm.

This Ra means a value measured by a light interference surface roughness meter (HD-2000, manufactured by WYKO) under the following conditions.

Ra is calculated after cylindrical compensation and gradient compensation by using an objective lens of 50 magnifications and an intermediate lens of 0.5 magnifications in a measuring range of 242 µm × 184 µm.

The leader tape of the present invention is preferably used in a magnetic recording and reproducing apparatus where the linear recording density is 100 kfci or more and the difference between the recording track width and the reproducing track width is from 0 to 16 µm. That is, in the case of a system where the difference between the recording track width and the reproducing track width exceeds 16 µm, the recording track width is sufficiently large as compared with the reproducing track width and therefore, even when track deviation on the order of several µm is generated due to deformation of the tape, the head runs on the recording track and the dropout does not increase. However, in a magnetic recording and reproducing apparatus having a large linear recording density where the difference between the recording track width and the reproducing track width is 16 µm or less, track deviation due to deformation of the tape is elicited to readily cause a problem of tape imprinting. Accordingly, the effect of the leader tape of the present invention is remarkably exerted when a magnetic recording and reproducing apparatus having a large linear recording density is used.

The magnetic recording and reproducing apparatus is not particularly limited as long as it comprises a magnetic tape cartridge and a magnetic tape drive.

The magnetic tape cartridge is not particularly limited as long as it comprises a cartridge case having rotatably housed therein a single reel or a plurality of reels, the reel having a magnetic tape wound therearound and joined with the leader tape of the present invention, but the effect of the present invention is remarkably brought out in the case of a single reel.

The leader tape of the present invention can be joined by attaching a known splicing tape in the state that one end of the leader tape is abutted against the leading end of a magnetic tape on which signals are recorded and reproduced. At the other end of the leader tape, a catching member such as leader pin is provided and used for fixing to the drive reel of the magnetic recording and reproducing apparatus.

The magnetic recording and reproduction may be performed by using a magnetic tape cartridge equipped with the leader tape of the present invention in a magnetic recording and reproducing apparatus. The recording and reproduction can be performed by using the magnetic tape joined with the leader tape under the conditions that the linear recording density is 100 kfci or more (preferably 120 kfci or more, more preferably 140 kfci or more) and the difference between the recording track width (preferably 25 µm or less, more preferably 15 µm or less) and the reproducing track width (preferably 15 µm or less, more preferably 10 µm or less) is from 0 to 16 µm (preferably from 0 to 12 µm, more preferably from 0 to 8 µm).

In the magnetic recording and reproduction using the leader tape and the magnetic tape cartridge of the present invention, even when the recording track width is narrow and the difference from the reproducing track width is small, track deviation can be suppressed and stable recording and reproduction can be obtained.

The recording and reproducing apparatus for performing the recording and reproduction with the above-described track widths is not particularly limited, and a known magnetic recording and reproducing apparatus having recording and reproducing heads can be used.

As for the magnetic head used in the present invention, an inductive head is preferred for recording and an MR head is preferred for reproduction.

The present invention is described in detail below.

### (Leader Tape)

As for the construction material of the leader tape, a plastic rich in elasticity, such as polyethylene terephthalate, polyethylene naphthalate, polybutylene terephthalate and polyimide, is preferably used. The leader tape may be a so-called support obtained by shaping the construction material itself into a tape form, but for the purpose of reducing damage of the head, a coating layer comprising a powder material and a binder is preferably provided on at least one surface of the support obtained as above.

As for the coating layer provided on the support, a coating layer comprising a binder having dispersed therein inorganic fine powder particles is mainly used. The inorganic fine powder particle may be either a nonmagnetic material or a magnetic particle. The coating layer comprises a single layer or a plurality of layers. The coating layer is formed on at least either one of the surface coming into contact with the magnetic head and the surface on the opposite side.

The coating layer is provided for the purpose of imparting a lacking function to the support, if desired, for example, imparting a cleaning effect by incorporating an abrasive particle into the surface coming in contact with the magnetic head, imparting an antistatic function by incorporating an electrically conducting particle, or recording a magnetic signal by incorporating a magnetic material.

As for the preferred coating layer, on the side coming into contact with the magnetic head, the same magnetic layer as in the data tape or a nonmagnetic layer is provided alone or a layer having a two-layer structure consisting of a nonmagnetic layer (lower layer) and a magnetic layer (upper layer) coated thereon is provided. Also, a backcoat (back layer) mainly comprising carbon black is provided on the opposite side.

The total thickness of the leader tape is preferably from 5 to 20 µm, more preferably from 8 to 18 µm.

The thickness of the coating layer is, in terms of the thickness of a single layer or the total thickness of a plurality of layers, preferably from 0.1 to 5.0 µm, more preferably from 0.5 to 3.0 µm. The thickness of the support is preferably from 3 to 17 µm, more preferably from 6 to 15 µm.

The center line average surface roughness Ra on at least one surface of the leader tape is from 10 to 60 nm, preferably from 20 to 50 nm, more preferably from 30 to 40 nm. With this center line average surface roughness, a cushioning effect is produced at the winding around a reel and imprinting can be prevented. The surface roughness Ra of the leader tape may be in the same or different level between the front and back surfaces. The surface roughness can be controlled by various methods. In the case of using a coating layer, the method includes, for example, selecting the roughness of support, selecting the thickness of coating layer, selecting the particle size of inorganic particle used in the coating layer, or selecting the linear pressure, roll surface property or the like in the surface forming treatment such as calendering treatment. In the case of controlling the surface roughness by the roughness of support, the roughness of the support is set to 5 to 80 nm, preferably from 10 to 65 nm. As for the inorganic powder used in the coating layer, an inorganic particle having an average particle size of 0.02 to 1 µm, preferably from 0.05 to 0.6 µm is used. The shape may be, for example, granular, acicular, tabular or die-like.

The friction coefficient against an Al₂O₃/TiC member on at least one surface of the leader tape is from 0.1 to 0.3, preferably from 0.1 to 0.25, more preferably from 0.1 to 0.20. By decreasing the friction coefficient of the leader tape, the reduction in the output due to loading/unloading can be suppressed. This is because the runnability of the leader tape on the head is enhanced and the damage of the head is decreased. If the friction coefficient is less than 0.1, the runnability becomes unstable and there arises an edge damage or deterioration of winding shape. Examples of the technique for adjusting the friction coefficient include selecting the center line surface roughness Ra of the support, selecting the size of the powder material contained in the nonmagnetic layer or magnetic layer, selecting the kind and amount of the lubricant, and selecting the linear pressure, roll surface property and the like in the surface forming treatment such as calendering treatment.

The friction coefficient as used herein means a friction coefficient when the leader tape is wound around an Al₂O₃/TiC-made cylinder having a diameter of 7.0 mm at an entire winding angle of 180° and caused to run at a speed of 0.5 mm/sec under a tension of 64 N. In the present invention, the friction coefficient on at least the side coming into contact with the magnetic head is preferably in the above-described range.

As for the Al₂O₃/TiC-made cylinder, a cylinder having a center line average surface roughness Ra of 10 to 20 nm is used.

The surface electric resistance of the leader tape is preferably 10¹⁰ Ω/sq or less, more preferably 10⁹ Ω/sq or less. With this surface electric resistance, the leader tape is prevented from electrification and the magnetic head is free from damage due to static electricity, as a result, not only the reliability is elevated but also the magnetic tape cartridge obtained by joining a leader tape having a strength fundamentally higher than that of a magnetic tape is enhanced in the durability against the repeated operation of loading/unloading into a magnetic recording and reproducing apparatus.

Examples of the method for controlling the surface electric resistance to a value include a method of adding an electrically conducting conductive powder such as carbon black to at least one layer out of a lower layer, an upper layer and a back layer. For example, carbon black is added in an amount of 1 to 20 parts by mass per 100 parts by mass of the binder in each layer.

The leader tape is preferably a magnetic tape constituted such that the lower layer is a nonmagnetic layer comprising an inorganic powder and a binder, the upper layer is a magnetic layer comprising a ferromagnetic powder and a binder, and a back layer is formed on the side opposite these layers.

The leader tape is described in detail below by referring to this magnetic tape.

### (Magnetic Layer)

### <Binder, etc. of Magnetic Layer and Nonmagnetic Layer>

As for the binder used in the magnetic layer and the nonmagnetic layer, a known thermoplastic resin, thermosetting resin or reactive resin, or a mixture thereof is used. In the case of a thermoplastic resin, a thermoplastic resin having a glass transition temperature of - 100 to 150°C, a number average molecular weight of 1,000 to 200,000, preferably from 10,000 to 100,000, and a polymerization degree on the order of about 50 to 1,000 is used.

Examples thereof include a polymer and a copolymer each comprising, as the constituent unit, vinyl chloride, vinyl acetate, vinyl alcohol, maleic acid, acrylic acid, acrylic ester, vinylidene chloride, acrylonitrile, methacrylic acid, methacrylic ester, styrene, butadiene, ethylene, vinyl butyral, vinyl acetal or vinyl ether; a polyurethane resin; and various rubber-based resins. Examples of the thermosetting resin and the reactive resin include a phenol resin, an epoxy resin, a curable polyurethane resin, a urea resin, a melamine resin, an alkyd resin, an acrylic reactive resin, a formaldehyde resin, a silicone resin, an epoxy-polyamide resin, a mixture of polyester resin and isocyanate prepolymer, a mixture of polyester polyol and polyisocyanate, and a mixture of polyurethane and polyisocyanate. These resins are described in detail in Plastic Handbook, Asakura Shoten. Furthermore, a known electron beam-curable resin may also be used in each layer. Examples and production methods thereof are described in detail in JP-A-62-256219.

These resins may be used individually or in combination, but in the present invention, a combination of at least one member selected from a vinyl chloride resin, a vinyl chloride-vinyl acetate copolymer, a vinyl chloride-vinyl acetate-vinyl alcohol copolymer and a vinyl chloride-vinyl acetate-maleic anhydride copolymer, with a polyurethane resin and a polyisocyanate is preferred.

As for the structure of the polyurethane resin, a known structure such as polyester polyurethane, polyether polyurethane, polyether polyester polyurethane, polycarbonate polyurethane, polyester polycarbonate polyurethane and polycaprolactone polyurethane, may be used. With respect to all of these binders, for obtaining more excellent dispersibility and higher durability, a binder in which at least one or more polar group selected from COOM, SO₃M, OSO₃M, P=O(OM)₂, O-P=O(OM)₂ (wherein M represents a hydrogen atom or an alkali metal salt group), OH, N(R)₂, N⁺(R)₃ (wherein R represents a hydrocarbon group), an epoxy group, SH and CN is introduced by copolymerization or addition reaction, if desired, is preferably used. The amount of such a polar group is from 10⁻¹ to 10⁻⁸ mol/g, preferably from 10⁻² to 10⁻⁶ mol/g.

The content of the hydroxyl group in the polyurethane resin is preferably from 3 to 20 groups per molecule, more preferably from 4 to 5 groups per molecule. If the hydroxyl group content is less than 3 groups per molecule, the reactivity with a polyisocyanate curing agent decreases and therefore, the film strength and durability are liable to deteriorate, whereas if it exceeds 20 groups, the solubility or dispersibility in a solvent tends to decrease. In order to adjust the hydroxyl group content in the polyurethane resin, a trifunctional or higher hydroxyl group-containing compound may be used at the synthesis of the polyurethane resin. Specific examples thereof include trimethylolethane, trimethylolpropane, trimellitic anhydride, glycerol, pentaerythritol, hexanetriol, and a trifunctional or higher hydroxyl group-containing branched polyester or polyether ester which is obtained by using a dibasic acid starting from a polyester polyol described in JP-B-6-64726 and using the compound as the glycol component. A trifunctional compound is preferred. When a tetrafunctional or higher functional compound is used, gelling readily proceeds in the reaction process.

Specific examples of such a binder for use in the present invention include VAGH, VYHH, VMCH, VAGF, VAGD, VROH, VYES, VYNC, VMCC, XYHL, XYSG, PKHH, PKHJ, PKHC and PKFE produced by Union Carbide Corp.; MPR-TA, MPR-TA5, MPR-TAL, MPR-TSN, MPR-TMF, MPR-TS, MPR-TM and MPR-TAO produced by Nissin Chemical Industry Co., Ltd.; 1000W, DX80, DX81, DX82, DX83 and 100FD produced by Electro-Chemical Industry Co., Ltd.; MR-104, MR-105, MR110, MR100, MR555 and 400X-110A produced by ZEON Corporation; Nipporan N2301, N2302 and N2304 produced by Nippon Polyurethane Industry Co., Ltd.; Pandex T-5105, T-R3080 and T-5201, Burnock D-400 and D-210-80, and Krisvon 6109 and 7209 produced by Dainippon Ink & Chemicals, Inc.; Vylon UR8200, UR8300, UR-8700, RV530 and RV280 produced by Toyobo Co., Ltd.; Daiferamine 4020, 5020, 5100, 5300, 9020, 9022 and 7020 produced by Dainichiseika Color & Chemicals Mfg. Co., Ltd.; MX5004 produced by Mitsubishi Chemical Corp.; Sunprene SP-150 produced by Sanyo Chemical Industries Co., Ltd.; and Saran F310 and F210 produced by Asahi Chemical Industry Co., Ltd.

Examples of the polyisocyanate which can be used include isocyanates such as tolylene diisocyanate, 4,4'-diphenylmethane diisocyanate (MDI), hexamethylene diisocyanate, xylylene diisocyanate, naphthylene-1,5-diisocyanate, o-toluidine diisocyanate, isophorone diisocyanate and triphenylmethane triisocyanate; a product of such an isocyanate and a polyalcohol; and a polyisocyanate produced by the condensation of isocyanates.

The binder for use in the magnetic layer and the binder for use in the nonmagnetic layer are usually used in an amount of 5 to 50 mass%, preferably from 10 to 30 mass%, based on the ferromagnetic powder and the nonmagnetic inorganic powder, respectively. The amount of the vinyl chloride-based resin when used is from 5 to 30 mass%, the amount of the polyurethane resin when used is from 2 to 20 mass%, and a polyisocyanate is preferably used in an amount of 2 to 20 mass% in combination with these resins, but for example, in the case where corrosion of the head occurs due to dechlorination in a slight amount, it is possible to use only a polyurethane and an isocyanate.

In such a magnetic tape, the amount of binder, the amounts of vinyl chloride resin, polyurethane resin, polyisocyanate and other resins occupying in the binder, the molecular weight of each resin constituting the magnetic layer, the amount of polar group, or the physical properties of the above-described resins can be of course varied in the nonmagnetic layer and each magnetic layer, if desired, and these should be rather optimized in each layer. In this respect, known techniques regarding a multilayer magnetic layer can be applied. For example, in the case of varying the amount of binder among respective layers, it is effective for reducing scratches on the magnetic layer surface to increase the amount of binder in the magnetic layer. For obtaining good head touch against the head, flexibility may be imparted by increasing the amount of binder in the nonmagnetic layer.

### <Ferromagnetic Powder>

The ferromagnetic powder for use in the magnetic layer is preferably a ferromagnetic alloy powder mainly comprising α-Fe. Such a ferromagnetic powder may contain, in addition to the predetermined atom, an atom such as Al, Si, S, Sc, Ca, Ti, V, Cr, Cu, Y, Mo, Rh, Pd, Ag, Sn, Sb, Te, Ba, Ta, W, Re, Au, Hg, Pb, Bi, La, Ce, Pr, Nd, P, Co, Mn, Zn, Ni, Sr and B. In particular, the ferromagnetic powder preferably contains at least one of Al, Si, Ca, Y, Ba, La, Nd, Co, Ni and B, more preferably at least one of Co, Y and Al, in addition to α-Fe.

The ferromagnetic alloy fine powder may contain a small amount of hydroxide or oxide. A ferromagnetic alloy fine powder produced by a known method may be used and examples of the method include the followings: a method of performing reduction by using a composite organic acid salt (mainly oxalate) and a reducing gas such as hydrogen; a method of reducing an iron oxide with a reducing gas such as hydrogen to obtain an Fe or Fe-Co particle; a method of thermally decomposing a metal carbonyl compound; a method of performing reduction by adding a reducing agent such as sodium borohydride, hypophosphite or hydrazine to an aqueous ferromagnetic metal solution; and a method of evaporating a metal in a low-pressure inert gas to obtain a fine powder. The thus-obtained ferromagnetic alloy powder may be subjected to a known gradual oxidation treatment, that is, may be treated by any of a method of immersing the powder in an organic solvent and then drying it, a method of immersing the powder in an organic solvent, charging an oxygen-containing gas to form an oxide film on the surface, and then drying it, and a method of forming an oxide film on the surface while adjusting partial pressures of an oxygen gas and an inert gas without using an organic solvent.

A hexagonal ferrite powder may also be used as the ferromagnetic powder for use in the magnetic layer. Examples of the hexagonal ferrite powder include barium ferrite, strontium ferrite, lead ferrite, calcium ferrite, and a substitution product thereof, such as Co substitution product. Specific examples thereof include magnetoplumbite-type barium ferrite and strontium ferrite; magnetoplumbite-type ferrite with the particle surface being covered by spinel; and magnetoplumbite-type barium ferrite and strontium ferrite partially containing a spinel phase. The hexagonal ferrite powder may contain, in addition to the predetermined atoms, an atom such as Al, Si, S, Sc, Ti, V, Cr, Cu, Y, Mo, Rh, Pd, Ag, Sn, Sb, Te, Ba, Ta, W, Re, Au, Hg, Pb, Bi, La, Ce, Pr, Nd, P, Co, Mn, Zn, Ni, Sr, B, Ge and Nb. In general, a hexagonal ferrite powder having added thereto elements such as Co-Ti, Co-Ti-Zr, Co-Ti-Zn, Ni-Ti-Zn, Nb-Zn-Co, Sb-Zn-Co and Nb-Zn may be used.

### (Nonmagnetic Layer)

The inorganic powder for use in the nonmagnetic layer is a nonmagnetic powder and can be selected from inorganic compounds such as metal oxide, metal carbonate, metal sulfate, metal nitride, metal carbide and metal sulfide. By incorporating carbon black into the nonmagnetic layer, a known effect, that is, reduction in the surface electric resistance Rs and the light transmittance, may be obtained and at the same time, a desired micro-Vickers hardness can be obtained. Also, a lubricant storage effect may be obtained by incorporating a carbon black into the lower layer. As for the kind of the carbon black, for example, furnace black for rubber, thermal black for rubber, carbon black for color, and acetylene black may be used. The following properties should be optimized according to the desired effect of the carbon black in the lower layer, and a higher effect is sometimes obtained by the combination use. In the nonmagnetic layer, an organic powder may also be added depending on the purpose. With respect to a lubricant, a dispersant, an additive, a solvent, a dispersing method and others in the nonmagnetic layer, known techniques regarding the magnetic layer can be applied.

### (Additives)

As for the additive used in the magnetic layer, nonmagnetic layer and the like, for example, those having a head-polishing effect, a lubricating effect, an antistatic effect, a dispersing effect or a plastic effect are used. Specific examples thereof include the compounds described in WO98/35345.

Examples of the lubricant which can be used include a monobasic fatty acid having a carbon number of 10 to 24, a metal salt thereof (e.g., Li, Na, K, Cu), a fatty acid monoester, fatty acid diester or fatty acid triester comprising a monobasic fatty acid having a carbon number of 10 to 24 and any one member of mono-, di-, tri-, tetra-, penta- and hexa-hydric alcohols having a carbon number of 2 to 12, a fatty acid ester of monoalkyl ether of alkylene oxide polymerization product, and a fatty acid amide having a carbon number of 8 to 22. Such a fatty acid or alcohol may contain an unsaturated bond or may be branched.

Specific examples of the fatty acid include a capric acid, a caprylic acid, a lauric acid, a myristic acid, a palmitic acid, a stearic acid, a behenic acid, an oleic acid, an elaidic acid, a linoleic acid, a linolenic acid and an isostearic acid. Specific examples of the esters include butyl stearate, octyl stearate, amyl stearate, isooctyl stearate, butyl myristate, octyl myristate, butoxyethyl stearate, butoxydiethyl stearate, 2-ethylhexyl stearate, 2-octyldodecyl palmitate, 2-hexyldodecyl palmitate, isohexadecyl stearate, oleyl oleate, dodecyl stearate, tridecyl stearate, oleyl erucate, neopentyl glycol didecanoate, and ethylene glycol dioleyl.

### (Back Layer)

The back layer preferably contains a carbon black and an inorganic powder. As for the binder and various additives, the formulation in the magnetic layer or nonmagnetic layer is applied. The thickness of the back layer is preferably from 0.1 to 1.0 µm, more preferably from 0.4 to 0.6 µm.

### (Support)

The support for use in the magnetic tape is preferably a nonmagnetic flexible support, and a known film such as polyesters (e.g., polyethylene terephthalate, polyethylene naphthalate), polyolefins, cellulose triacetate, polycarbonate, aromatic or aliphatic polyamide, polyimide, polyamideimide, polysulfone, polyaramid and benzoxazole, can be used. Among these, a polyethylene terephthalate film and a polyimide film are preferred. Such a support may be previously subjected to a corona discharge treatment, a plasma treatment, an adhesion facilitating treatment, a heat treatment, a dust removing treatment or the like.

The support suitably has an elastic modulus in the machine direction of 3.5 to 20 GPa, preferably 6.2 GPa or less, and an elastic modulus in the transverse direction of 3.5 to 20 GPa, preferably 5.7 GPa or less. More preferably, the elastic modulus both in the machine direction and the transverse direction is from 4 to 15 GPa, preferably 5.4 GPa or less.

### (Production Method)

The magnetic layer and the nonmagnetic layer can be produced by dissolving or dispersing the above-described components in a solvent to prepare respective coating materials, and sequentially coating the coating materials on a support (web). Either a wet-on-wet method of coating the magnetic layer while the nonmagnetic layer is still in the wetted state, or a wet-on-dry method of coating the magnetic layer on the dried nonmagnetic layer may be employed. The coated and dried web is appropriately subjected to an orientation treatment, a calendering treatment, and slitting.

### (Magnetic Tape for Data Recording)

The magnetic tape for data recording is preferably a magnetic tape in which a magnetic layer is provided on a nonmagnetic support and, if desired, a backcoat is provided. In a preferred embodiment, a nonmagnetic lower layer and a magnetic upper layer are coated on a support of 2 to 9 µm, and a backcoat is provided on the opposite surface. The constituent elements of the magnetic tape are elements suited for high density recording, and preferred examples of the magnetic tape include those described in JP-A-2001-250219 and JP-A-2002-251710.

### (Magnetic Tape Cartridge)

The magnetic tape cartridge of the present invention comprises a cartridge case having rotatably housed therein a single reel or a plurality of reels, the reel having a magnetic tape wound therearound, wherein the leader tape of the present invention is used as a leader tape joined to the leading end of the magnetic tape and drawn out into a magnetic recording and reproducing apparatus while leading the magnetic tape.

### (Magnetic Recording and Reproducing Apparatus)

The leader tape of the present invention provides a remarkable effect particularly when used in a magnetic recording and reproducing apparatus where the linear recording density is 100 kfci or more and the difference between the recording track width and the reproducing track width is from 0 to 16 µm, and provides more remarkably effect when used in a magnetic recording and reproducing apparatus where the difference between the recording track width and the reproducing track width is 10 µm or less.

The thickness of the leader tape is suitably 5 times or less, preferably 3 times or less, more preferably 2 times or less, the thickness of the magnetic tape.

The length of the leader tape is preferably more than the length totalizing the length of at least three rounds of the drive reel in a magnetic recording and reproducing apparatus and the length of the running path from the opening of the cartridge case to the drive reel.

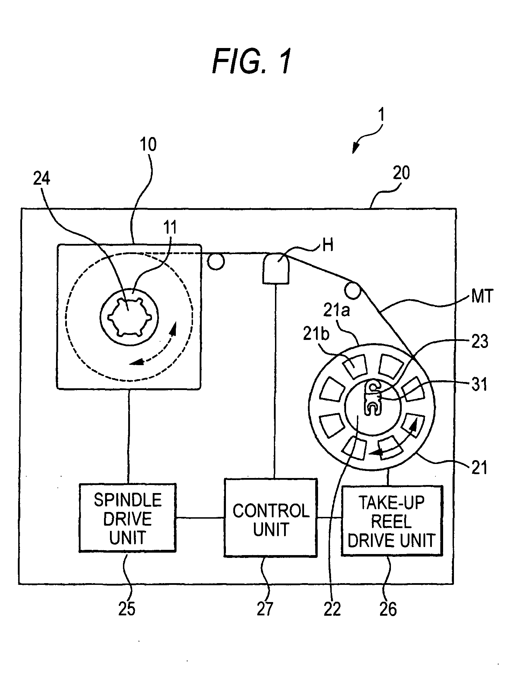

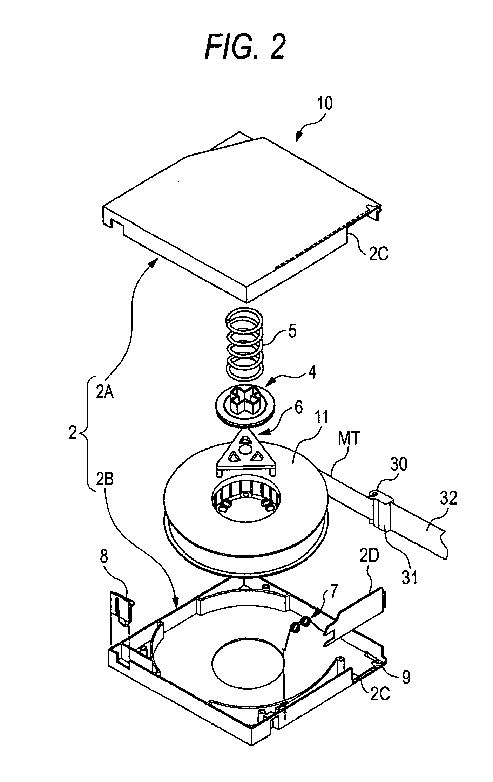

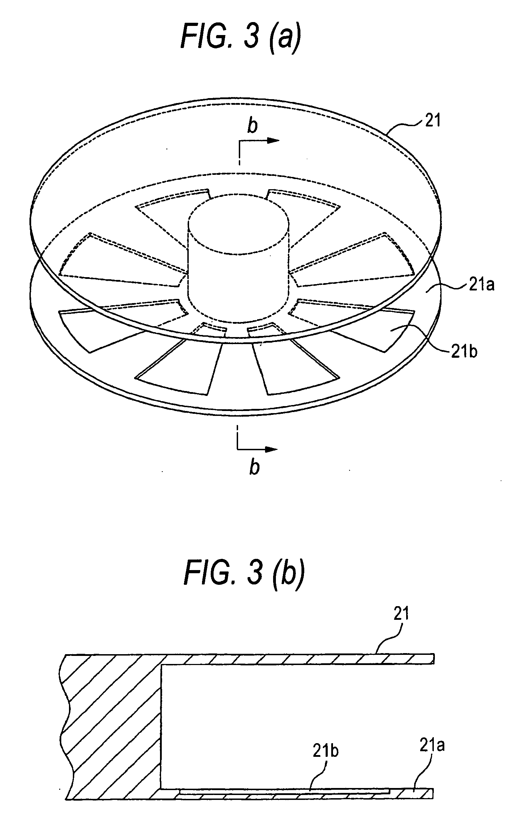

The magnetic recording and reproducing apparatus according to the embodiment of the present invention is described in detail below by referring to the drawings. In the drawings referred to, Fig. 1 is a block diagram conceptually showing a magnetic recording and reproducing apparatus according to one embodiment of the present invention, Fig. 2 is an exploded perspective view showing a magnetic tape cartridge used in the same magnetic recording and reproducing apparatus, Fig. 3(a) is a perspective view showing a drive reel (take-up reel) used in the same magnetic recording and reproducing apparatus, and Fig. 3(b) is an enlarged cross-sectional view of the line b-b portion in Fig. 3(a). The magnetic recording and reproducing apparatus described in this embodiment comprises a magnetic tape cartridge in which a tape-like recording medium is wound around one cartridge reel (delivery reel), and a magnetic tape drive (tape drive) into which the magnetic tape cartridge is loaded.

As shown in Fig. 1, the magnetic recording and reproducing apparatus 1 comprises a magnetic tape cartridge 10 and a magnetic tape drive 20. In this magnetic recording and reproducing apparatus 1, recording of information on the magnetic tape MT or reproduction of information recorded on the magnetic tape MT is performed while taking up the magnetic tape MT which is a magnetic tape wound in the magnetic tape cartridge 10, by the drive reel 21 of the magnetic tape drive 20 serving as the receiving side, or rewinding the magnetic tape MT wound around the drive reel 21 toward the cartridge reel (delivery reel) 11.

As shown in Fig. 2, the magnetic tape cartridge 10 is in conformity to the LTO Standard and has a cartridge case 2 divided into a lower half 2B and an upper half 2A. The cartridge case 2 comprises in the inside thereof a single cartridge reel 11 around which a magnetic tape MT is previously wound; a reel lock 4 and a compression coil spring 5 for keeping the rotation of the cartridge reel 11 in the locked state; a release pad 6 for releasing the locked state of the cartridge reel 11; a slide door 2D for opening and closing a magnetic tape outlet 2C formed on one side face of the cartridge case 2 to extend across the lower half 2B and the upper half 2A; a torsion coil spring 7 for energizing the slide door 2D to the closing position of the magnetic tape outlet 2C; a safety lug 8; and a leader pin rack 9 formed near the magnetic tape outlet 2C. A leader tape LT is joined to the leading end of the magnetic tape MT. The magnetic tape MT shown in Fig. 2 is a leader tape LT.

Such a magnetic tape cartridge 10 is, as shown in Fig. 1, loaded in a magnetic tape drive 20. The leader tape LT is drawn out by a leader block 31 described later, and the leader block 31 is fitted into a recess 23 provided in the core part 22 of the drive reel 21 of the magnetic tape drive 20, whereby the leader tape LT in the magnetic tape cartridge 10 can be wound around the core part 22 of the drive reel 21.

The leader tape LT and the magnetic tape MT used in the magnetic tape cartridge 10 of this embodiment are described in detail below.

The leader tape LT is formed long and has a length allowing for winding of at least three rounds on the core part 22 of the drive reel 21 in the magnetic tape drive 20. The leader tape LT used preferably has a length of 0.5 to 5.0 m, more preferably 0.9 m.

The magnetic tape drive 20 is described below.

The magnetic tape drive 20 comprises, as shown in Fig. 1, a spindle 24, a spindle drive unit 25 for driving the spindle 24, a magnetic head H, a drive reel 21, a take-up reel drive unit 26 for driving the drive reel 21, and a control unit 27.

The magnetic tape drive 20 has a leader block 31 engageable with a leader pin 30 (see, Fig. 2) provided at the leading end of the leader tape LT in the magnetic tape cartridge 10, and the leader block 31 is carried to the magnetic tape cartridge 10 side by a drawing-out mechanism (not shown) including a drawing-out guide 32 or the like.

At the time of performing the recording/reproduction of data with the magnetic tape MT, the spindle 24 and the drive reel 21 are driven to rotate by the spindle drive unit 25 and the take-up reel drive unit 26, whereby the magnetic tape MT is conveyed.

In the drive reel 21, as shown in Figs. 3(a) and 3(b), radial groove parts 21b are formed at regular intervals on the top surface of the lower flange part 21 a. This groove part 21b functions as an exhaust passage for discharging the air accompanied on winding the magnetic tape MT around the drive reel 21.

The action of the magnetic tape drive 20 is described below.

When the magnetic tape cartridge 10 is loaded in the magnetic tape drive 20 as shown in Fig. 1, the drawing-out guide 32 (see, Fig. 2) draws out the leader pin 30 and carries it to the drive reel 21 through a magnetic head H, and the leader block 31 is fitted into the recess 23 in the core part 22 of the drive reel 21. In the recess 23, an anchor part (not shown) which engages with the leader block 31 and prevents the leader block 31 from jumping out of the recess 23 is provided.

The spindle drive unit 25 and the take-up reel drive unit 26 are driven by the control of the control unit 27, and the spindle 24 and the drive reel 21 are rotated in the same direction so that the leader tape LT and the magnetic tape MT can be conveyed to the drive reel 21 from the cartridge reel 11. By this operation, the leader tape LT is wound around the drive reel 21, and the magnetic tape MT is then wound around the drive reel 21 while allowing the magnetic head H to perform recording of information on the magnetic tape MT or reproduction of information recorded on the magnetic tape MT.

In the case of rewinding the magnetic tape MT around the cartridge reel 11, the driving spindle 24 and the drive reel 21 are driven to rotate in the direction opposite the above, whereby the magnetic tape MT is conveyed to the cartridge reel 11. Also at this rewinding, recording of information on the magnetic tape MT or reproduction of information recorded on the magnetic tape MT is performed by the magnetic head H.

In such a magnetic recording and reproducing apparatus 1, the magnetic tape MT is usually kept wound on the magnetic tape cartridge 10 side in many cases, but depending on the mode of use, may be kept for a long time in the state of being wound around the drive reel 21 on the magnetic tape drive 20 side. In such usage, the usefulness of preventing tape imprinting is particularly high, and the magnetic recording and reproducing apparatus 1 of this embodiment is suitable. More specifically, in winding the magnetic tape MT around the drive reel 21 of the magnetic tape drive 20 from the magnetic tape cartridge 10, the leader block 31 for drawing out the magnetic tape MT from the magnetic tape cartridge 10 is fitted into the core part 22 of the drive reel 21 but depending on the dimensional accuracy of the leader block 31, the leader block 31 may protrude from the end face of the core part 22 (generation of level difference). In such a case, if a conventional leader tape is wound around the drive reel 21, the level difference is imprinted on the magnetic tape MT, and recording failure or information loss of the magnetic tape MT may occur.

On the other hand, in the magnetic recording and reproducing method of the present invention, the level difference can be successfully absorbed by the leader tape LT and this provides an excellent advantage that recording failure or information loss of the magnetic tape MT can be prevented from occurring even in the case of using a magnetic recording and reproducing apparatus 1 where the linear recording density is 100 kfci or more and the difference between the recording track width and the reproducing track width is from 0 to 16 µm.

### EXAMPLES

The present invention is described in greater detail below by referring to Examples, but the present invention should not be construed as being limited to these Examples.

### (Example 1)

In Examples, the "parts" means "parts by mass".

### Production of Leader Tape:

**<Preparation of Coating Solution>**

| Composition of Coating Material for Upper Layer: | | | |
|---|---|---|---|
| | Ferromagnetic metal powder | | 100 parts |
| | | coercive force Hc: | 128 kA/m (1,600 Oe) |
| | | specific surface area by BET method: | 53 m²/g |
| | | crystallite size: | 160 Å |
| | | saturation magnetization σs: | 130 A·m.²/kg |
| | | average long axis length: | 130 nm |
| | | average acicular ratio: | 6.5 |
| | | pH: | 9.3 |
| | | Co/Fe: | 5 atm% |
| | | Al/Fe: | 7 atm% |
| | | Y/Fe: | 2 atm% |
| | | water-soluble Na: | 5 ppm |
| | | water-soluble Ca: | 1 ppm |
| | | water-soluble Fe: | 1 ppm |
| | Vinyl chloride copolymer (MR-110, produced by ZEON Corporation) (-SO₃Na content: 5×10⁻⁶ eq/g, polymerization degree: 350, epoxy group (3.5 mass% as monomer unit)) | | 10 parts |
| | Polyester polyurethane resin (neopentyl glycol/caprolactone polyol/MDI = 0.9/2.6/1 (by mass), -SO₃Na group content: 1×10⁻⁴ eq/g) | | 2.5 parts |
| | σ-Alumina (average particle diameter: 0.3 µm) | | 10 parts |
| | Carbon black (average particle diameter: 0.10 µm) | | 1 part |
| | Butyl stearate | | 1.5 parts |
| | Stearic acid | | 0.5 parts |
| | Methyl ethyl ketone | | 150 parts |
| | Cyclohexanone | | 50 parts |
| | Toluene | | 40 parts |

| Composition of Coating Material for Lower Layer: | | | |
|---|---|---|---|
| Nonmagnetic powder TiO₂ | | | 90 parts |
| | | specific surface area by BET method: | 45 m²/g |
| | | average particle diameter: | 0.1 µm |
| | | pH: | 6.5 |
| | | water-soluble Na: | 5 ppm |
| | | water-soluble Ca: | 1 ppm |
| Carbon black (produced by Mitsubishi Carbon K.K.) | | | 10 parts |
| | | average primary particle diameter: | 16 nm |
| | | DBP oil absorption: | 80 ml/100 g |
| | | pH: | 8.0 |
| | | specific surface area by BET method: | 250 m²/g |
| Vinyl chloride-based copolymer (MR-110, produced by ZEON Corporation) | | | 12 parts |
| Polyester polyurethane resin (neopentyl glycol/caprolactone polyol/MDI = 0.9/2.6/1 (by mass), -SO₃Na group content: 1 × 10⁻⁴ eq/g) | | | 5 parts |
| Butyl stearate | | | 1.06 parts |
| Stearic acid | | | 1.18 parts |
| Methyl ethyl ketone | | | 150 parts |
| Cyclohexanone | | | 50 parts |
| Toluene | | | 40 parts |

In each of the coating materials for the upper layer and the lower layer, those components were kneaded in a continuous kneader and then dispersed by using a sand mill. Thereafter, 5 parts of polyisocyanate (Coronate L, produced by Nippon Polyurethane Industry Co., Ltd.) was added to each liquid dispersion. After further adding 40 parts of methyl ethyl ketone to each liquid dispersion, the liquid dispersions were filtered through a filter having an average pore diameter of 1 µm to prepare a coating material for the upper layer and a coating material for the lower layer.

| Composition of Coating Material for Forming Back Layer: | | |
|---|---|---|
| | Fine particulate carbon black (BP-800, produced by Cabot, average particle diameter: 17 nm) | 100 parts |
| | Coarse particulate carbon black (thermal black, produced by Carncalp, average particle diameter: 270 nm) | 10 parts |
| | σ-Alumina (hard inorganic powder) (average particle diameter: 200 nm, Mohs' hardness: 9) | 5 parts |
| | Nitrocellulose resin | 140 parts |
| | Polyurethane resin | 15 parts |
| | Polyester resin | 5 parts |
| | Dispersant: copper oleate | 5 parts |
| | Copper phthalocyanine | 5 parts |
| | Barium sulfate (precipitating) (BF-1, produced by Sakai Chemical Industry Co., Ltd., average particle diameter: 50 nm, Mohs' hardness: 3) | 5 parts |
| | Methyl ethyl ketone | 1,200 parts |
| | Butyl acetate | 300 parts |
| | Toluene | 600 parts |

These components for forming the back layer were kneaded in a continuous kneader and then dispersed by using a sand mill. Thereafter, 40 parts of polyisocyanate (Coronate L, produced by Nippon Polyurethane Industry Co., Ltd.) and 1,000 parts of methyl ethyl ketone were added to the obtained liquid dispersion, and the liquid dispersion was filtered through a filter having a pore diameter of 1 µm to prepare a coating material for the back layer.

### Production of Leader Tape:

The obtained coating materials for the upper layer and the lower layer were simultaneously coated one on another on a long polyethylene terephthalate (PET) support (thickness: 14.0 µm, Young's modulus in machine direction (MD): 500 kg/mm² (4.9 GPa), Young's modulus in transverse direction (TD): 500 kg/mm² (4.9 GPa), center line average surface roughness Ra on the upper layer coating side (cutoff value: 0.25 mm): 38 nm, Ra on the back layer side: 36 nm) such that the upper layer and the lower layer had a dry thickness of 0.8 µm and 1.8 µm, respectively. Subsequently, the upper layer still in the wetted state was subjected to an orientation treatment by using a cobalt magnet having a magnetic force of 300 mT and a solenoid having a magnetic force of 150 mT, and then dried to complete the formation of the upper layer.

Thereafter, the coating material for the back layer prepared above was coated on the other side of the support (the opposite side to the upper layer) to have a dry thickness of 0.5 µm and then dried to form a back layer. In this way, a roll for a leader tape, where an upper layer and a back layer were provided on one surface and another surface of the support, respectively, was obtained.

Furthermore, the web was applied with a tension of 1.5 Kg/m (14.7 N/m) and caused to run in a heat-treatment zone at a temperature of 110°C for 5 seconds, thereby effecting a heat treatment.

After the heat treatment, the roll was subjected to a calendering treatment by passing it through a 7-stage calendering machine (temperature: 90°C, linear pressure: 300 Kg/cm (294 kN/m)) comprising a heating metal roll and an elastic roll obtained by covering a core metal with a thermosetting resin, and then taken up under a tension of 5 Kg/m (49 N/m).

The obtained roll was heat-treated at 50°C for 48 hours and after slitting into a width of 1/2 inch, the roll was demagnetized by passing it through a solenoid having a magnetic flux density of 300 mT.

### (Production of Magnetic Tape Cartridge)

The obtained 1/2 inch-width magnetic tape was used as the leader tape and connected to a commercially available LTO tape to produce a magnetic tape cartridge. At this time, 580 m of the magnetic tape was wound up.

### (Example 2)

A magnetic tape cartridge of the present invention was prepared in the same manner as in Example 1 except that in the production of the leader tape, a PET support having a center line average surface roughness Ra of 20 nm on both surfaces was used.

### (Example 3)

A magnetic tape cartridge of the present invention was prepared in the same manner as in Example 1 except that in the production of the leader tape, a PET support having a center line average surface roughness Ra of 50 nm on both surfaces was used.

### (Example 4)

A magnetic tape cartridge of the present invention was prepared in the same manner as in Example 1 except that in the production of the leader tape, a PET support having a center line average surface roughness Ra of 20 nm on the upper layer side and having a center line average surface roughness Ra of 5 nm on the back layer side was used.

### (Comparative Example 1)

A magnetic tape cartridge of Comparative Example 1 was prepared in the same manner as in Example 1 except that in the production of the leader tape, a PET support having a center line average surface roughness Ra of 5 nm on both surfaces was used.

### (Comparative Example 2)

A magnetic tape cartridge of Comparative Example 2 was prepared in the same manner as in Example 1 except that in the production of the leader tape, a PET support having a center line average surface roughness Ra of 30 nm on both surfaces was used and a coating solution where the amount of stearic acid added as the lubricant was halved to 0.25 parts in the magnetic layer and to 0.59 parts in the nonmagnetic layer was used.

### (Comparative Example 3)

A magnetic tape cartridge of Comparative Example 3 was prepared in the same manner as in Example 1 except that in the production of the leader tape, a PET support having a center line average surface roughness Ra of 80 nm on both surfaces was used.

### (Evaluation of Magnetic Tape Cartridge)

The following evaluations were performed by using an LTO drive where a level difference of 100 µm was provided in the core part of the drive reel, and using the magnetic tape cartridges of Examples 1 to 3 and Comparative Examples 1 to 3.
(1) Friction Coefficient of Leader Tape
   A friction coefficient when the leader tape was wound around an Al₂O₃/TiC-made cylinder having a diameter of 7.0 mm and a center line average surface roughness Ra of 18 nm at an entire winding angle of 180° by arranging the magnetic surface (upper layer) coming into contact with the head to lie on the inward side and caused to run at a speed of 0.5 mm/sec under a tension of 64 N, was measured.
(2) Tape Imprinting of Drive Reel
   The magnetic tape cartridge was subjected to recording of signals having a linear recording density of 150 kfci by an LTO drive with a recording track width of 10 µm and a reproduction track width of 4.5 µm and after winding the magnetic tape in the full length around the drive reel under a tension of 0.8 N, the magnetic tape cartridge with the drive was stored in an environment of 50°C and 80% RH for 12 hours. The tape after storage was played for reproduction and the error rate in the starting part of the tape was measured. Also, the length in which imprinting was generated was measured with an eye.
(3) Loading/Unloading Test
   The magnetic tape cartridge was subjected to recording of signals having a linear recording density of 150 kfci by an LTO drive with a recording track width of 10 µm and a reproduction track width of 4.5 µm, and the error rate before and after repeating the loading/unloading 10,000 times was measured.

The results are shown in Table 1. Incidentally, Ra of the upper layer and Ra of the back layer of the leader tape are also shown.

**(Table 1)**

| | Ra of Upper Layer (nm) | Ra of Back Layer (nm) | Friction Coefficient (µ value) | Imprinting Length after Storage (m) | Error Rate after Storage | Change in Error Rate due to Loading/ Unloading |
|---|---|---|---|---|---|---|
| Example 1 | 31 | 33 | 0.19 | 0.6 | 6×10⁻⁷ | 3×10⁻⁷→9×10⁻⁷ |
| Example 2 | 19 | 21 | 0.26 | 1.7 | 2×10⁻⁶ | 4×10⁻⁷→3×10⁻⁶ |
| Example 3 | 51 | 52 | 0.13 | 0.8 | 4×10⁻⁶ | 3×10⁻⁷→5×10⁻⁷ |
| Example 4 | 18 | 7 | 0.26 | 2.0 | 3×10⁻⁶ | 4×10⁻⁷→4×10⁻⁶ |
| Comparative Example 1 | 6 | 8 | 0.33 | 9.2 | 4×10⁻⁴ | 3x 10⁻⁷→8× 10⁻⁵ |
| Comparative Example 2 | 30 | 31 | 0.34 | 0.8 | 6×10⁻⁷ | 2x 10⁻⁷→7× 10⁻⁵ |
| Comparative Example 3 | 79 | 81 | 0.08 | 0.7 | 2×10⁻⁴ | 2×10⁻⁷→4×10⁻⁷ |

It is seen that in Examples of the present invention, the imprinting length or the error rate after storage is improved or fluctuation in the error rate due to loading/unloading is small as compared with Comparative Examples.

## Claims

1. A leader tape having a center line average roughness Ra of 10 to 60 nm on at least one surface of the leader tape and a friction coefficient of 0.1 to 0.3 against an Al₂O₃/TiC member.

2. The leader tape according to claim 1, which has a coating layer on at least one surface of the leader tape, the coating layer containing a powder material and a binder.

3. A magnetic tape cartridge comprising:
a cartridge case; and
a single reel or a plurality of reels, each reel being rotatably housed in the cartridge case and having a magnetic tape wound therearound,
wherein the magnetic tape has a leader tape according to claim 1 or 2, the leader tape being jointed to an leading end of the magnetic tape and drawn out into a magnetic recording and reproducing apparatus while leading the magnetic tape.
